# EUROPÄISCHE PATENTSCHRIFT

(11) **EP 2 236 778 B1**
(45) Veröffentlichungstag und Bekanntmachung des Hinweises auf die Patenterteilung: **05.09.2012**
(21) Anmeldenummer: 10003021.2
(22) Anmeldetag: 23.03.2010
(51) Int. Cl.: F01M 5/00, F01M 5/02, F16H 57/04, F16N 7/14

(54) **Vorrichtung und Verfahren zur Speicherung von erwärmtem Getriebeöl**
Device and method for storing hot transmission lubricant
Procédé et dispositif pour accumuler de l'huile chaud de trasmission

(30) Priorität: 25.03.2009 DE 102009014896; 04.11.2009 DE 102009051820
(43) Veröffentlichungstag der Anmeldung: 06.10.2010
(73) Patentinhaber: Audi AG, 85045 Ingolstadt (DE)
(72) Erfinder: Gutz, Holger, 85084 Reichertshofen (DE); Barnreiter, Karl, 85122 Hitzhofen (DE); Märkl, Johann, 85049 Ingolstadt (DE)
(74) Vertreter: Lehle, Josef

(56) Entgegenhaltungen:
- DE-A1- 4 135 424
- DE-A1-102005 029 638
- GB-A- 523 031
- GB-A- 532 177

## Beschreibung

Die Erfindung betrifft eine Vorrichtung und ein Verfahren zur Speicherung von erwärmtem Getriebeöl gemäß dem Oberbegriff der Ansprüche 1 bzw. 21

Kraftfahrzeuggetriebe, wie Schaltgetriebe oder automatische Getriebe, besitzen entweder eine Tauchschmierung oder eine Trockensumpfschmierung. Bei der Tauchschmierung sammelt sich das Getriebeöl durch seine Schwerkraft in einem Ölsumpf des Getriebes, in den die Zahnräder teilweise eintauchen, so dass das Getriebeöl im Betrieb durch die Rotation der Zahnräder zu den gewünschten Schmierstellen, wie den Lagern und den Eingriffsbereichen von Verzahnungen zusammenwirkender Zahnräder mitgeführt wird. Getriebe mit Tauchschmierung enthalten daher zumeist größere Mengen an Getriebeöl, was im Betrieb zu beträchtlichen Panschverlusten führt, d.h. durch die ständige Bewegung des Getriebeöls verursachten Leistungsverlusten. Da zudem kaltes Getriebeöl eine relativ hohe Viskosität besitzt und sich nach einem Kaltstart der Brennkraftmaschine des Kraftfahrzeugs nur langsam infolge von Reibungswärme erwärmt, treten in derartigen Getrieben bis zum Erreichen der Betriebstemperatur des Getriebeöls verhältnismäßig hohe Leistungsverluste auf. Obwohl die Menge des Getriebeöls in Achs- oder Differentialgetrieben im Allgemeinen geringer ist, kommt es auch dort nach einem Kaltstart zu merklichen Leistungsverlusten.

Bei der Trockensumpfschmierung wird das Getriebeöl in einem getrennten Ölbehälter mitgeführt und durch eine Druckpumpe eines Lager-/Zahnrad-Beölungssystems zu den gewünschten Schmierstellen gefördert. Das von dort abtropfende Getriebeöl wird von einer Saugpumpe aus dem Ölsumpf abgesaugt und in den Ölbehälter zurück gefördert. Durch die zusätzlichen Komponenten, wie Ölbehälter und Pumpen, verursacht die Trockensumpfschmierung jedoch einen größeren Aufwand.

Um die durch kaltes Getriebeöl verursachten Leistungsverluste zu vermeiden, ist es zum Beispiel aus der WO 2008/094110 A1 bereits bekannt, das Getriebeöl in einem Getriebe eines von einer Brennkraftmaschine angetriebenen Kraftfahrzeugs bei niedrigen Getriebeöltemperaturen in einem Wärmetauscher durch Wärmetausch mit erwärmtem Motoröl aus der Brennkraftmaschine aufzuheizen.

Weiter ist es aus der DE 44 31 351 A1 bekannt, Kraftfahrzeuge mit einem Wärmeträgerkreislauf zu versehen, der es gestattet, kaltes Getriebeöl bei Bedarf durch Wärmetausch mit einem durch den Wärmeträgerkreislauf umgewälzten Wärmeträger zu erwärmen. Der Wärmeträgerkreislauf umfasst dort neben einem Getriebeöl-Wärmetauscher auch einen Wärmespeicher, zum Beispiel einen Latentwärmespeicher, durch den der Wärmeträger, zum Beispiel Kühlwasser einer Brennkraftmaschine, vor dem Hindurchtritt durch den Getriebeöl-Wärmetauscher geleitet werden kann.

Darüber hinaus offenbart die DE 10 2005 052 632 A1 eine Vorrichtung, die zum Erwärmen von durch Öl geschmierten Kraftmaschinen, wie Brennkraftmaschinen, Turbinen, Pumpen und Kompressoren dient und einen wärmeisolierten Ölwärmespeicher umfasst. Der wärmeisolierte Ölwärmespeicher gestattet es, bei einer Außentemperatur von 25°C je nach Wärmedämmung im Inneren eine Öltemperatur von etwa 50°C und mehr über drei Tage und länger zu halten. Der bekannte Ölwärmespeicher bildet zusammen mit mindestens einer und vorzugsweise zwei elektrisch angetriebenen Ölpumpen, einem Ölfilter und mindestens einem Steuerventil eine Baueinheit zum Anbau an oder zum Einbau in die Kraftmaschine, so dass die Speicherung von erwärmtem Öl mit der bekannten Vorrichtung einen verhältnismäßig hohen Aufwand verursacht.

Ausgehend hiervon liegt der Erfindung die Aufgabe zugrunde, eine Vorrichtung und ein Verfahren der eingangs genannten Art zu schaffen, mit denen sich einerseits die durch eine Tauschschmierung verursachten Pansch- oder Leistungsverluste ohne den mit einer Trockensumpfschmierung verbundenen Aufwand vermeiden lassen und mit denen sich andererseits erwärmtes Getriebeöl mit geringem Aufwand in einen wärmeisolierten Speicherbehälter zuführen lässt, in dem eine Abkühlung des Getriebeöls verzögert werden kann.

Zur Lösung dieser Aufgabe umfasst die erfindungsgemäße Vorrichtung einen Federspeicherzylinder, mit dem sich das betriebswarme Getriebeöl ohne die Notwendigkeit einer zusätzlichen Ölpumpe zwischen dem Getriebe und dem Speicherbehälter hin und her fördern lässt.

Der Erfindung liegt der Gedanke zugrunde, ähnlich wie bei der Trockensumpfschmierung einen getrennten Speicherbehälter für das Getriebeöl vorzusehen, jedoch das Getriebeöl nicht wie bei der Trockensumpfschmierung mit Hilfe einer Ölpumpe aus dem Getriebe in den Speicherbehälter zu fördern, sondern durch die Kraft einer Feder, die Teil des Federspeicherzylinders ist und abwechselnd durch eine von außen ausgeübte Kraft zusammengedrückt bzw. durch Entlastung der Kraft wieder entspannt wird, um das Getriebeöl zwischen dem Getriebe und dem Speicherbehälter hin und her zu fördern.

Eine bevorzugte Ausgestaltung der Erfindung sieht vor, dass bei dem erfindungsgemäßen Verfahren und mit der erfindungsgemäßen Vorrichtung im Zuge der Kraftentlastung und der dadurch bedingten Entspannung der Feder Getriebeöl aus dem Getriebe in den Speicherbehälter gefördert wird, während Getriebeöl aus dem Federspeicherzylinder in das Getriebe gefördert wird, wenn die Feder durch die von außen aufgebrachte Kraft zusammengedrückt wird. Die Förderung des Getriebeöls erfolgt in beiden Fällen durch die Verschiebung eines Kolbens des Federspeicherzylinders, wobei die Verschiebung des Kolbens beim Befüllen des Speicherbehälters durch die Kraft der Feder hervorgerufen wird, während beim Entleeren des Speicherbehälters die Verschiebung des Kolbens entgegen der Kraft der Feder durch die von außen aufgebrachte Kraft hervorgerufen wird.

Gemäß einer bevorzugten Ausgestaltung der Erfindung wird der Speicherbehälter von dem wärmeisolierten Federspeicherzylinder selbst gebildet, der damit nicht nur zur Förderung sondern auch zur Speicherung des erwärmten Getriebeöls dient.

Der Federspeicherzylinder umschließt zweckmäßig zwei durch den Kolben voneinander getrennte, auf entgegengesetzten Seiten des Kolben angeordnete Kammern, von denen vorteilhaft eine zur Speicherung des erwärmten Getriebeöls dient und zudem die Feder beherbergt, die durch das Getriebeöl vor Korrosion geschützt ist. Die Feder ist zweckmäßig als Druckfeder und am besten als Schraubendruckfeder ausgebildet.

Die andere Kammer kann entweder belüftet sein, um den Widerstand zu verringern, der dem Kolben bei seiner Verschiebung durch die Kraft der Feder entgegengesetzt wird, oder kann mit einem unter Druck stehenden Fluid beaufschlagt werden, um den Kolben entgegen der Kraft der Feder zu verschieben. Dort, wo das Getriebeöl in der einen Kammer und das Fluid in der anderen Kammer eine unterschiedliche Zusammensetzung besitzen, sind die beiden Kammern vorteilhaft durch eine Membrane oder durch einen Rollbalg getrennt, wobei die Membrane bzw. der Rollbalg zugleich die Dichtung zum Gehäuse des Federspeicherzylinders bildet, um ein Entweichen von Getriebeöl bzw. Fluid aus dem Federspeicherzylinder sicher zu verhindern.

Die Verschiebung des Kolbens entgegen der Kraft der Feder erfolgt bevorzugt dadurch, dass die andere Kammer entweder direkt mit einem unter Druck stehenden Fluid beaufschlagt wird, oder dass im Fall einer belüfteten Kammer eine Kolbenstange des Kolbens oder ein starr mit dem Kolben verbundener zweiter Kolben mit dem unter Druck stehenden Fluid beaufschlagt wird.

Der Speicherbehälter bzw. die zur Speicherung des Getriebeöls dienende Kammer des Federspeicherzylinders kann mit dem Getriebe durch eine einzige Getriebeölleitung verbunden sein, deren eines Ende in den Speicherbehälter bzw. die mit der Feder bestückte Kammer mündet, während ihr anderes Ende unterhalb eines Flüssigkeitsspiegels in einen Ölsumpf des Getriebes mündet, so dass stets Öl aus dem Getriebe in den Speicherbehälter bzw. in den Federspeicherzylinder gesaugt werden kann. Gemäß einer weiteren bevorzugten Ausgestaltung der Erfindung sind jedoch zwei Leitungen vorgesehen, nämlich eine Saugleitung und eine Rücklaufleitung, von denen die erstere ebenfalls unterhalb des Flüssigkeitsspiegels des Getriebeölsumpfs in das Getriebe mündet, während die letztere vorteilhaft zu einem Lager- oder Zahnrad-Beölungssystem des Getriebes führt. Das Lager- oder Zahnrad-Beölungssystem sorgt dafür, dass zum Getriebe zurückgeführte Getriebeöl zu den Schmierstellen, wie den Lagern und den Eingriffsbereichen von Verzahnungen zusammenwirkender Zahnräder, geleitet wird, von wo es durch seine Schwerkraft in den Getriebeölsumpf zurücktropft oder zurückfließt. In der Druck- oder Rücklaufleitung kann vorteilhaft eine Filterpatrone zur Filterung des Getriebeöls vorgesehen sein, die zweckmäßig zwischen dem Speicherbehälter bzw. dem Federspeicherzylinder und dem Lager- oder Zahnrad-Beölungssystem angeordnet ist.

Bei einem Einsatz der erfindungsgemäßen Vorrichtung zur Speicherung von Getriebeöl eines Getriebes einer Brennkraftmaschine oder eines von einer Brennkraftmaschine angetriebenen Kraftfahrzeugs wird das Fluid vorzugsweise vom Motoröl der Brennkraftmaschine gebildet wird, da dieses während der gesamten Betriebszeit der Brennkraftmaschine von einer Motorölpumpe der Brennkraftmaschine unter Druck gehalten wird, dieser Druck jedoch unmittelbar nach dem Abstellen der Brennkraftmaschine einbricht. Der Druckeinbruch bewirkt eine sofortige Verschiebung des Kolbens des Federspeicherzylinders durch die Kraft der Feder und damit eine selbsttätige Förderung des Getriebeöls in den wärmeisolierten Speicherbehälter, bevor sich das Getriebeöl abkühlen kann.

Alternativ kann jedoch auch ein anderes Fluid, vorzugsweise ein inkompressibles Fluid, verwendet werden, das statt von der Motorölpumpe von einer separaten Fluidpumpe mit Druck beaufschlagt wird. Zum Beispiel könnte bei Baggern, Raupen oder anderen Baumaschinen ein Hydraulikfluid aus einem Hydraulikkreislauf verwendet werden, dessen Hydraulikpumpe als Fluidpumpe dient und in Kombination mit dem Federspeicherzylinder für die Zwangsumwälzung des Getriebeöls zwischen dem Speicherbehälter und dem Lager- oder Zahnrad-Beölungssystem sorgt. Da die separate Fluidpumpe, wie z.B. eine Hydraulikpumpe von Baggern, Raupen oder anderen Baumaschinen, in der Regel ebenfalls von einer Brennkraftmaschine angetrieben wird und somit beim Abstellen der Brennkraftmaschine stoppt, bricht auch in diesem Fall der Druck des Fluids unmittelbar nach dem Abstellen der Brennkraftmaschine ein.

Dadurch, dass in beiden Fällen nach dem Abstellen der Brennkraftmaschine ein Teil des Getriebeöls aus dem Getriebe in den Federspeicherzylinder gefördert wird, kann außerdem der Ölstand im Getriebe beim nächsten Start der Brennkraftmaschine abgesenkt werden, was zu einer Reduzierung der Panschverluste führt, bis durch den steigenden Druck des Motoröls die Feder des Federspeicherzylinders allmählich wieder zusammengedrückt und das Getriebeöl wieder aus dem Speicherbehälter in das Getriebe zurückgefördert wird. Um den Zeitraum zu verlängern, in dem eine Reduzierung der Panschverluste möglich ist, kann die vom Speicherbehälter bzw. vom Federspeicherzylinder zum Getriebe führende Getriebeölleitung zweckmäßig mit einem Ventil oder einer richtungsabhängigen Drossel versehen sein, um den Rückstrom des Getriebeöls zum Getriebe zu verlangsamen. Im Falle eines Ventils kann dieses beispielsweise als Schaltventil, Wegeventil oder Mengenbegrenzungsventil ausgebildet sein. Im Fall von zwei getrennten Leitungen zwischen dem Federspeicherzylinder und dem Getriebe ist die Drossel bzw. das Ventil zweckmäßig zwischen dem Speicherbehälter bzw. Federspeicherzylinder und der zum Getriebe bzw. zum Lager- oder Zahnrad-Beölungssystem führenden Rücklaufleitung angeordnet, während Richtungs- oder Rückschlagventile eine gewünschte Förderrichtung sicherstellen. Alternativ kann die Verlangsamung des Rückstroms des Getriebeöls zum Getriebe auch durch eine gesteuerte Verringerung der Bewegungsgeschwindigkeit des Kolbens erreicht werden, zum Beispiel durch eine gesteuerter Verringerung der Fluidzufuhr zur Kolbenstange.

Eine weitere bevorzugte Ausgestaltung der Erfindung sieht vor, das Getriebeöl nicht nur beim Abstellen der Brennkraftmaschine in den Speicherbehälter bzw. den Federspeicherzylinder zu fördern, sondern es wie bei einer Trockensumpfschmierung auch während des Betriebs der Brennkraftmaschine intermittierend aus dem Speicherbehälter bzw. dem Federspeicherzylinder in das Lager- oder Zahnrad-Beölungssystem des Getriebes zu drücken und es nach dem Abtropfen in den Getriebeölsumpf aus diesem zurück in den Speicherbehälter bzw. den Federspeicherzylinder zu saugen, so dass infolge der kleineren Getriebeölmenge im Getriebe weniger Panschverluste auftreten bzw. mit einfachen Mitteln eine gezielte Schmiermittelversorgung von speziellen Getriebebauteilen, wie Lagern oder Zahnrädern, erfolgen kann.

Die intermittierende Förderung des Getriebeöls zwischen dem Speicherbehälter bzw. den Federspeicherzylinder einerseits und dem Getriebe andererseits kann zweckmäßig mit Hilfe eines Wegeventils im Fluidkreislauf gesteuert werden. Vorzugsweise sorgt das Wegeventil im Fluid- bzw. Motorölkreislauf dafür, dass die mit dem Fluid bzw. mit dem Motoröl beaufschlagte Kammer des Federspeicherzylinders abwechselnd durch eine Druckleitung mit der Fluidpumpe bzw. der Motorölpumpe einerseits und durch eine Rücklaufleitung mit einem Tank verbunden wird, so dass das Fluid bzw. das Motoröl abwechselnd in der mit dem Fluid bzw. mit dem Motoröl beaufschlagten Kammer des Federspeicherzylinders abwechselnd mit Druck beaufschlagt und drucklos wird.

Um Wärmeverluste durch den Kolben und ggf. durch die belüftete Kammer hindurch zu verhindern, ist der Kolben zweckmäßig ebenso wie ein Gehäuse des Federspeicherzylinders mit einer Wärmeisolierung versehen. Zur Wärmeisolierung können entweder feste Isolier- oder Dämmstoffe, wie geschäumte oder faserförmige Isolier- oder Dämmstoffe und/oder das Isolier- oder Thermoskannenprinzip genutzt werden, bei dem in einem doppelwandigen Gehäuse des Federspeicherzylinders ein Vakuum angelegt wird.

Um den Strömungsweg des Getriebeöls zwischen dem Federspeicherzylinder und dem Getriebe zu verkürzen und die Anzahl der benötigten Bauteile zu reduzieren, ist der Federspeicherzylinder zweckmäßig zwischen gegenüberliegenden Wänden von zwei Gehäuseteilen eines Getriebegehäuses angeordnet. Auf diese Weise können separate Leitungen für das unter Druck stehende Fluid/Motoröl bzw. für das Getriebeöl eingespart werden, da die beiden Kammern des Federspeicherzylinders durch Kanäle in den Wänden der Gehäuseteile mit einer Fluid-/Motoröl-Pumpe bzw. mit dem Inneren des Getriebegehäuses verbunden werden können. Außerdem kann auf diese Weise der Einbau des Federspeicherzylinders in das Getriebegehäuse erleichtert und insbesondere ein mit einem Vakuum beaufschlagtes doppelwandiges Isoliergehäuse des Federspeicherzylinders gut vor Schlägen und Stößen geschützt untergebracht werden.

Die erfindungsgemäße Vorrichtung wird vorzugsweise in Kraftfahrzeugen zur Speicherung von erwärmtem Getriebeöl aus einem Schalt- oder Automatikgetriebe eingesetzt, kann jedoch auch zur Speicherung von erwärmtem Getriebeöl aus einem Achs- oder Differenzialgetriebe dienen und allgemein in sowohl in Fahrzeugen als auch für stationäre Anwendungen Einsatz finden.

Das erfindungsgemäße Verfahren ist **dadurch gekennzeichnet, dass** das Getriebeöl durch die Kraft einer Feder aus dem Getriebe in den Speicherbehälter gefördert wird, wobei bevorzugt die Feder durch den Druck eines Fluids zusammengedrückt und bei der Entspannung der Feder Getriebeöl aus dem Getriebe in den Speicherbehälter gefördert wird.

Im folgenden wird die Erfindung anhand von zwei in der Zeichnung dargestellten Ausführungsbeispielen näher erläutert. Es zeigen:
Fig. 1 eine schematische Darstellung einer erfindungsgemäßen, mit einem Federspeicherzylinder ausgestatteten Vorrichtung zur Speicherung von erwärmtem Getriebeöl eines Kraftfahrzeuggetriebes im Betrieb einer Brennkraftmaschine des Kraftfahrzeugs;
Fig. 2 eine schematische Darstellung der Vorrichtung aus Fig. 1 bei abgestellter Brennkraftmaschine;
Fig. 3 eine vergrößerte Darstellung eines modifizierten Federspeicherzylinders der Vorrichtung.

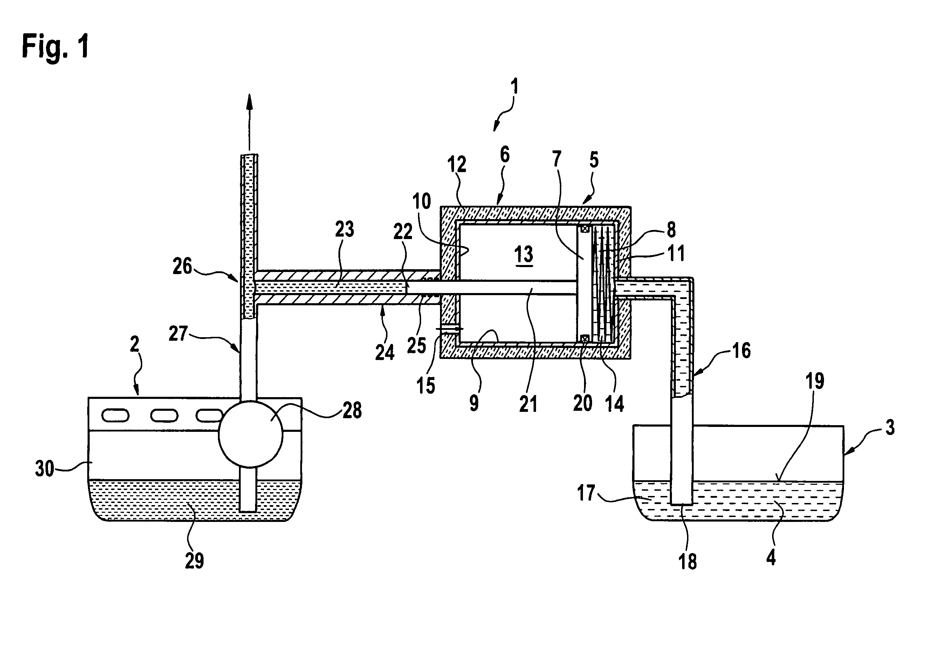

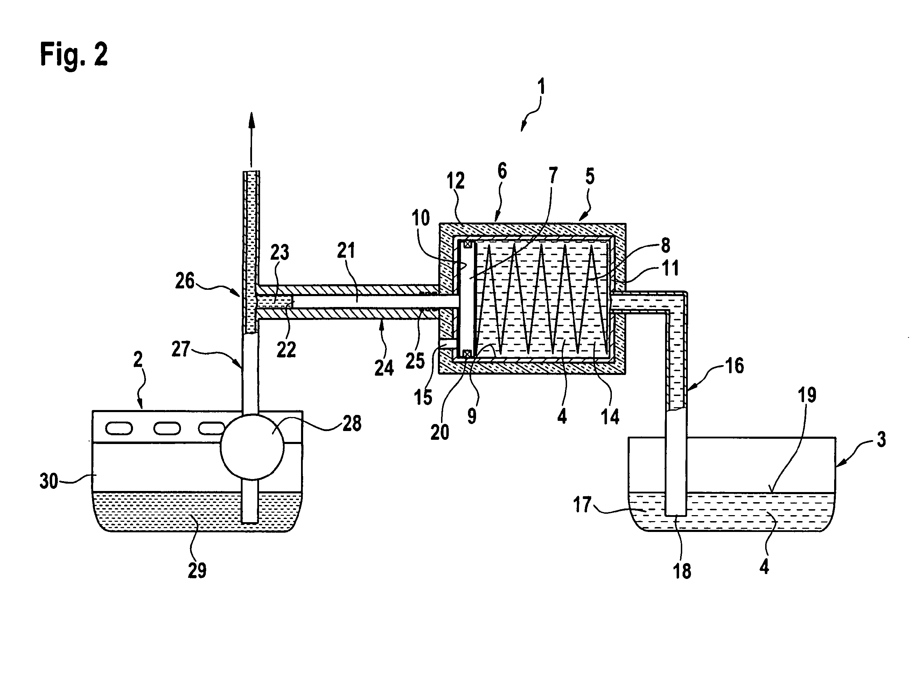

Die in den Figuren 1 und 2 dargestellte, in ein Kraftfahrzeug mit einer Brennkraftmaschine 2 und mindestens einem Getriebe 3 eingebaute Vorrichtung 1 hat die Aufgabe, zum einen nach dem Abstellen der Brennkraftmaschine 2 einen Teil des im Getriebe 3 enthaltenen Getriebeöls 4 in betriebswarmem Zustand in einen wärmeisolierten Speicherbehälter zu fördern, um die Abkühlung des Getriebeöls 4 zu verlangsamen, und zum anderen das Getriebeöl 4 bei einem erneuten Start der Brennkraftmaschine 2 wieder in das Getriebe 3 zuzuführen, um dort die durch die Viskosität von kaltem Getriebeöl 4 bedingten Verluste zu minimieren.

Zu diesem Zweck wird der Speicherbehälter der Vorrichtung von einem wärmeisolierten Federspeicherzylinder 5 gebildet, der ein an beiden Stirnenden geschlossenes zylindrisches Gehäuse 6, einen innerhalb des Gehäuses 6 verschiebbaren Kolben 7 und eine ebenfalls innerhalb des Gehäuses 6 angeordnete Schraubendruckfeder 8 umfasst.

Das Gehäuse 6 besteht im Wesentlichen aus einer hohlzylindrischen Umfangswand 9 und zwei parallelen Stirnwänden 10, 11, die jeweils an den Stirnenden des Gehäuses 6 angeordnet sind. Das Gehäuse 6 ist an seiner Außenseite mit einer Wärmeisolierung 12 versehen, welche die Umfangswand 9 und die beiden Stirnwände 10, 11 im Wesentlichen vollständig bedeckt. Die Wärmeisolierung 12 kann zum Beispiel aus einer dicken Schicht Mineralwolle, Schaumstoff oder aus einem anderen geeigneten Material bestehen, jedoch ist es alternativ auch möglich, das Prinzip einer Thermoskanne oder Isolierkanne zu nutzen und das Gehäuse 6 des Federspeicherzylinders als doppelwandiges Edelstahlgehäuse auszubilden, bei dem der Zwischenraum zwischen den Wänden evakuiert ist, so dass darin ein Vakuum herrscht.

Das Gehäuse 6 umschließt zwei durch den Kolben 7 voneinander getrennte Kammern 13, 14, von denen eine 14 die Schraubendruckfeder 8 beherbergt, die sich mit ihren entgegengesetzten Stirnenden gegen den Kolben 7 bzw. die benachbarte Stirnwand 11 des Gehäuses 6 abstützt, während die andere Kammer 13 mit einer in der entgegengesetzten Stirnwand 10 des Gehäuses 6 angeordneten Belüftungsöffnung 15 versehen ist, durch die bei einer Bewegung des Kolbens 7 im Gehäuse 6 Umgebungsluft in die Kammer 13 angesaugt bzw. die angesaugte Umgebungsluft wieder aus der Kammer 13 ausgestoßen werden kann, um die Ausbildung eines Unter- oder Überdrucks in der Kammer 13 zu verhindern.

Die mit der Schraubendruckfeder 8 bestückte Kammer 14 dient auch als Speichervolumen zur Speicherung von erwärmtem Getriebeöl 4 und kommuniziert zu diesem Zweck durch eine Getriebeölleitung 16 mit einem Ölsumpf 17 des Getriebes 3. Dabei mündet ein Ende 18 der Getriebeölleitung 16 im Inneren des Getriebes 3 unterhalb des Getriebeölspiegels 19 in den Ölsumpf 17, während das andere Ende der Getriebeölleitung 16 in der Mitte der Stirnwand 11 des Gehäuses 6 in die Kammer 14 mündet. Die Getriebeölleitung 16 kann mit einem Ventil oder einer richtungsabhängigen Drossel (nicht dargestellt) versehen sein, um den in den Ölsumpf 17 zurück geförderten Volumenstrom des Schmieröls zu begrenzen, und dadurch die Ölmenge im Ölsumpf 17 und somit auch die Panschverluste klein zu halten.

Der Kolben 7 ist entlang seiner äußeren Umfangsfläche durch Dichtringe 20 (nur einer dargestellt) gegenüber der Umfangswand 9 des Gehäuses 6 abgedichtet, um ein Entweichen von Getriebeöl 4 aus der als Speichervolumen dienenden Kammer 14 in die belüftete Kammer 13 und damit in die Umgebung zu verhindern.

Um zu verhindern, dass sich das erwärmte Getriebeöl 4 in der Kammer 14 infolge von Wärmeverlusten durch den Kolben 7 und durch die Belüftungsöffnung 15 abkühlt, besteht der Kolben 7 entweder aus einem Material mit geringer Wärmeleitfähigkeit oder ist ähnlich wie das Gehäuse 6 auf seiner von der Schraubendruckfeder 8 abgewandten Seite mit einer Wärmeisolierschicht (nicht dargestellt) überzogen.

Der Kolben 7 ist fest mit einer zylindrischen Kolbenstange 21 verbunden, die koaxial zur Längsmittelachse des Gehäuses 6 über die von der Schraubendruckfeder 8 abgewandte Seite des Kolbens 7 übersteht und mit ihrem freien Ende 22 in eine zylindrische Bohrung 23 eines in axialer Richtung nach außen über die Stirnwand 10 des Gehäuses 6 überstehenden Rohrstutzens 24 ragt. Die Bohrung 23 weist einen geringfügig größeren Durchmesser als die Kolbenstange 21 auf und ist durch eine oder mehrere, in Nuten in der Innenwand der Bohrung 23 eingesetzte Dichtringe 25 gegenüber der Umfangsfläche der Kolbenstange 21 abgedichtet.

Der Rohrstutzen 24 ist über ein T-Stück 26 mit einer Öldruckleitung 27 der Brennkraftmaschine 2 verbunden, durch die von einer Motorölpumpe 28 der Brennkraftmaschine 2 Motoröl 29 aus einer Ölwanne 30 eines Zylinderkurbelgehäuses der Brennkraftmaschine 2 zur Schmierung in den Zylinderkopf oder in andere zu schmierende und/oder zu kühlende Bereiche der Brennkraftmaschine 2 zugeführt werden kann. An Stelle der Getriebeölleitung 16 kann auch der Rohrstutzen 24 mit einer richtungsabhängigen Drossel oder einem Ventil (nicht dargestellt) versehen sein, um die Bewegungsgeschwindigkeit des Kolbens zu verlangsamen und damit das Schmieröl zeitverzögert in das Getriebe 3 zurückzufördern.

Im folgenden wird die Funktionsweise der Vorrichtung 1 näher erläutert: Da sich während des Betriebs der Brennkraftmaschine 2 deren Motorölpumpe 28 stets im Betrieb befindet, herrscht hinter der Motorölpumpe 28 in der Öldruckleitung 27 und damit auch im T-Stück 26 ein verhältnismäßig hoher Motoröldruck, der im Inneren des Rohrstutzens 24 auf das freie Stirnende 22 der Kolbenstange 21 einwirkt. Da die Schraubendruckfeder 8 relativ schwach dimensioniert und daher die von der Schraubendruckfeder 8 auf den Kolben 7 ausgeübte Federkraft kleiner ist als die durch den Motoröldruck auf die Kolbenstange 21 ausgeübte hydraulische Kraft, befindet sich der Kolben 7 während des Betriebs der Brennkraftmaschine 2 immer in seiner in der Fig. 1 dargestellten Endstellung, in der die Schraubendruckfeder 8 ganz zusammengedrückt ist und der Kolben 7 gegen einen Anschlag (nicht dargestellt) des Gehäuses 6 anliegt. In dieser Endstellung des Kolbens 7 ist das Volumen der Kammer 14 und damit die Menge des im Federspeicherzylinder 5 gespeicherten Getriebeöls minimal, während umgekehrt die Getriebeölmenge innerhalb des Getriebes 3 maximal ist.

Wenn die Brennkraftmaschine 2 abgestellt wird, bricht jedoch der Motoröldruck hinter der Motorölpumpe 28 ein. Dies hat zur Folge, dass das freie Ende 22 der Kolbenstange 21 vom Motoröldruck entlastet wird, wodurch sich die Schraubendruckfeder 8 entspannt und den Kolben 7 innerhalb des Gehäuses 6 in seine in Fig. 2 dargestellte Endstellung verschiebt, in der er gegen die Stirnwand 10 des Gehäuses 6 anliegt. Infolge der Verschiebung des Kolbens 7 wird betriebswarmes Getriebeöl 4 aus dem Ölsumpf 17 des Getriebes 4 durch die Leitung 16 in die Kammer 14 gesaugt, deren Volumen in dieser Endstellung des Kolbens 7 ebenso wie die Menge des im Federspeicherzylinder 5 befindlichen Getriebeöls 4 maximal ist, während umgekehrt die Menge des Getriebeöls 4 innerhalb des Getriebes 3 minimiert wird.

Infolge der Wärmeisolierung des als Speicherbehälters dienenden Federspeicherzylinders 5 kühlt sich das im Inneren der Kammer 14 befindliche Getriebeöl 4 viel langsamer als das Getriebeöl 4 im Getriebe 3 und das Getriebe 3 selbst ab, so dass das Getriebeöl 4 in der Kammer 14 selbst nach einer längeren Stillstandszeit der Brennkraftmaschine 2 immer noch um einiges wärmer als das Getriebeöl 4 im Getriebe 3 ist.

Wenn die Brennkraftmaschine 2 dann gestartet wird, baut sich hinter der Motorölpumpe 28 in der Öldruckleitung 27, im T-Stück 26 und im Rohrstutzen 24 erneut ein relativ hoher Motoröldruck auf, durch den der Kolben 7 entgegen der Kraft der Schraubendruckfeder 8 erneut in seine in Fig. 1 dargestellte Endstellung verschoben und dabei das in der Kammer 14 befindliche Getriebeöl 4 durch die Leitung 16 nahezu vollständig aus der Kammer 14 in das Getriebe 3 gefördert wird.

Um das Volumen des Federspeicherzylinders 5 optimal auszunutzen und eine Abkühlung des beim Abstellen der Brennkraftmaschine 2 in die Kammer 14 gesaugten betriebswarmen Getriebeöls 4 durch ein in der Kammer 14 befindliches abgekühltes Getriebeöl-Restvolumen zu vermeiden, wird dieses letztere durch konstruktive Maßnahmen minimiert, wie beispielsweise durch eine in Draufsicht spiralförmige Schraubenddruckfeder 8, die in zusammengedrücktem bzw. gespanntem Zustand weniger Platz benötigt.

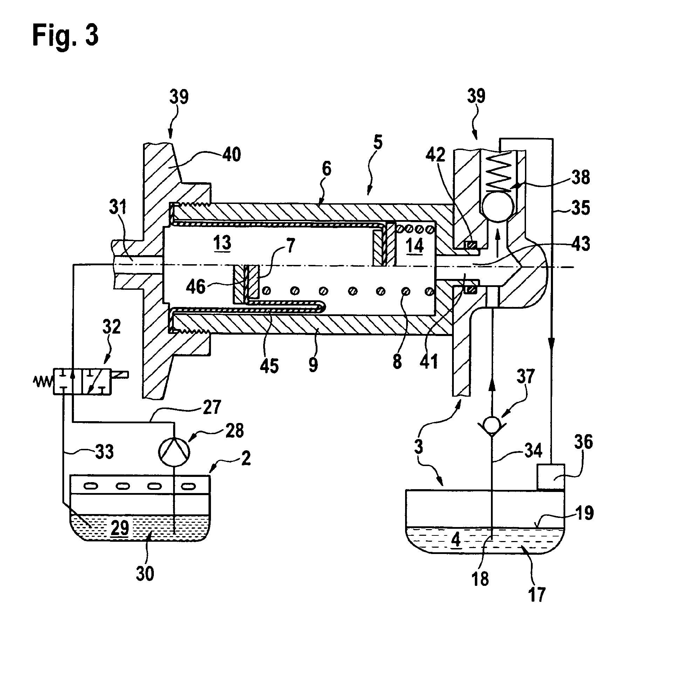

Der in Fig. 3 dargestellte Federspeicherzylinder 5 unterscheidet sich von dem zuvor beschriebenen Federspeicherzylinder 5 in mehreren Punkten: Zum einen ist die Kammer 13 nicht belüftet, sondern über einen Motorölkanal 31 und über ein steuerbares Mehrwegeventil 32 wahlweise mit der Öldruckleitung 27 bzw. einer Motoröl-Rücklaufleitung 33 verbunden. Dadurch kann die Kammer 13 im Betrieb der Brennkraftmaschine 2 durch gezielte Ansteuerung des Mehrwegeventils 32 mit unter Druck stehendem Motoröl 29 aus der Öldruckleitung 27 beaufschlagt werden, um die Schraubendruckfeder 8 in der Kammer 14 zusammenzudrücken, wie in der oberen Hälfte des Federspeicherzylinders 5 dargestellt, und dadurch das in der Kammer 14 enthaltene Getriebeöl 4 zum Getriebe 3 zu fördern. Alternativ dazu kann die Kammer 13 durch die Rücklaufleitung 33 mit der Ölwanne 30 verbunden werden, um den Motoröldruck in der Kammer 14 zu entlasten, wodurch sich die Schraubendruckfeder 8 in der Kammer 14 entspannt, wie in der unteren Hälfte des Federspeicherzylinders 5 dargestellt. Bei der Entspannung der Feder 8 wird einerseits Getriebeöl 4 aus dem Getriebe 3 in die Kammer 14 des Federspeicherzylinders 5 angesaugt, während andererseits das in der Kammer 13 enthaltene Motoröl 29 durch das Mehrwegeventil 32 und die Rücklaufleitung 33 in die Ölwanne 3 strömt.

Außerdem ist der Federspeicherzylinder 5 dort nicht durch eine einzige Getriebeölleitung 16 mit dem Getriebe 3 verbunden, sondern über eine Saugleitung 34 und eine Rückführleitung 35, die gemeinsam an der Stirnwand 11 des Gehäuses 6 des Federspeicherzylinders 5 in die Kammer 14 münden. Das andere Ende 18 der Saugleitung 34 befindet sich wie bei der Getriebeölleitung 16 unterhalb des Getriebeölspiegels 19 im Ölsumpf 17 des Getriebes 3, während die Rückführleitung 35 zu einem Lager-/Zahnrad-Beölungssystem 36 des Getriebes 3 führt. Das Lager-/Zahnrad-Beölungssystem 36 dient dazu, das bei der Beaufschlagung der Kammer 13 mit unter Druck stehendem Motoröl 29 aus der Kammer 14 herausgedrückte Getriebeöl 4 zu den Schmierstellen des Getriebes 3 zuzuführen, d.h. den Lagern und den Eingriffsbereichen von Verzahnungen zusammenwirkender Zahnräder, so dass bei jeder Entleerung der Kammer 14 ähnlich wie bei einer Trockensumpfschmierung für eine Zwangsschmierung der Schmierstellen gesorgt werden kann. Die Saugleitung 34 und die Rückführleitung 35 enthalten jeweils ein Rückschlag- oder Einwegeventil 37 bzw. 38, so dass sie nur in der Richtung des Pfeils vom Getriebeöl 4 durchströmt werden können.

Anders als der Federspeicherzylinder 5 in den Figuren 1 und 2, in den nur beim Abstellen der Brennkraftmaschine Getriebeöl 4 aus dem Getriebe 3 gefördert wird, wird der Federspeicherzylinder 5 in Fig. 3 zudem im Betrieb der Brennkraftmaschine 2 in ähnlicher Weise wie die Pumpen einer Trockensumpfschmierung genutzt, um in kurzen Zeitabständen intermittierend Getriebeöl 4 aus dem Ölsumpf 17 des Getriebe 3 durch die Saugleitung 34 in die Kammer 14 anzusaugen und es wieder aus der Kammer 14 auszustoßen, um es durch die Rückführleitung 35 zum Lager-/Zahnrad-Beölungssystem 36 zuzuführen. Zu diesem Zweck wird das Mehrwegeventil 32 in regelmäßigen Zeitabständen und/oder in Abhängigkeit vom Schmierölbedarf der Schmierstellen umgeschaltet, um die Kammer 13 abwechselnd mit unter Druck stehendem Motoröl 29 zu befüllen bzw. zu entleeren und dadurch die Schraubendruckfeder 8 in der Kammer 14 abwechselnd zusammenzudrücken und zu entspannen. Dies bewirkt eine intermittierende Förderung von Getriebeöl 4 zum Lager-/Zahnrad-Beölungssystem 36, wodurch ohne die Notwendigkeit einer Pumpe eine regelmäßige Zwangsschmierung der Schmierstellen sichergestellt werden kann. Das von den Schmierstellen abtropfende Getriebeöl 4 sammelt sich durch seine Schwerkraft wieder im Ölsumpf 17, von wo es erneut in die Kammer 14 des Federspeicherzylinders 5 gesaugt werden kann.

Neben dem Rückschlag- oder Einwegeventil 38 kann in der Rückführleitung 35 zusätzlich eine Filterpatrone (nicht dargestellt) zur Filterung des Getriebeöls 4 und/oder ein Mengenbegrenzungsventil (nicht dargestellt) oder eine Drossel (nicht dargestellt) vorgesehen sein, um das Zurückströmen des Getriebeöls 4 aus dem Federspeicherzylinder 5 zum Lager-/Zahnrad-Beölungssystem 36 zu verlangsamen. Dadurch können einerseits die Panschverluste des Getriebes 3 durch die geringere Ölmenge im Ölsumpf 17 vermindert und andererseits die Zeitdauer der Zwangsschmierung verlängert werden. Dasselbe Ergebnis kann auch durch ein Mengenbegrenzungsventil oder eine Drossel in der Öldruckleitung 27 erreicht werden.

Weiter ist der Federspeicherzylinder 5 in Fig. 3 nicht getrennt vom Getriebe 3 ausgebildet, sondern in ein Getriebegehäuse 39 des Getriebes 3 integriert, so dass die Stirnwand 10 des Gehäuses 6 des Federspeicherzylinders 5 von einer Wand 40 des Getriebegehäuses 39 gebildet wird, durch die der Motorölkanal 31 in die Kammer 13 mündet. Die andere Stirnwand 11 des Gehäuses 6 des Federspeicherzylinders 5 weist einen überstehenden Rohrstutzen 41 auf, der mittels einer O-Ring-Dichtung 42 dichtend in eine mit der Saugleitung 34 und der Rückführleitung 35 kommunizierende Bohrung 43 in einer gegenüberliegenden Wand 44 des Getriebegehäuses 39 eingesetzt ist. Die beiden Wände 40, 44 sind Teil von zwei unterschiedlichen Gehäuseteilen des Getriebegehäuses 39, bei deren Zusammenbau der Federspeicherzylinder 5 zwischen die Wände 40, 44 eingesetzt wird.

Um einen Kontakt zwischen dem Motoröl 29 in der Kammer 13 und dem Getriebeöl 4 in der Kammer 14 zu verhindern, enthält der Federspeicherzylinder 5 darüber hinaus einen Rollbalg 45, d.h. einen einseitig geschlossenen Schlauch aus einem ölbeständigen Gummi- oder Elastomermaterial, dessen geschlossenes Ende 46 am Kolben 7 befestigt ist, während sein offenes Ende dichtend zwischen der Umfangswand 9 des Gehäuses 6 und einem als Schraubstutzen ausgebildeten Teil der Wand 40 des Getriebegehäuses 39 befestigt ist und für eine Abdichtung der Kammer 13 zur Umgebung sorgt. Alternativ dazu könnte zwischen dem Motoröl 29 in der Kammer 13 und dem Getriebeöl 4 in der Kammer 14 auch eine Membran vorgesehen sein.

### BEZUGSZEICHENLISTE

- 1: Vorrichtung
- 2: Brennkraftmaschine
- 3: Getriebe
- 4: Getriebeöl
- 5: Federspeicherzylinder
- 6: Gehäuse
- 7: Kolben
- 8: Schraubendruckfeder
- 9: Umfangswand Gehäuse
- 10: Stirnwand Gehäuse
- 11: Stirnwand Gehäuse
- 12: Wärmeisolierung Gehäuse
- 13: Kammer
- 14: Kammer
- 15: Belüftungsöffnung
- 16: Getriebeölleitung
- 17: Ölsumpf Getriebe
- 18: Ende Getriebeölleitung
- 19: Getriebeölspiegel
- 20: Dichtungen
- 21: Kolbenstange
- 22: freies Ende Kolbenstange
- 23: Bohrung
- 24: Rohrstutzen
- 25: Dichtringe
- 26: T-Stück
- 27: Öldruckleitung
- 28: Ölpumpe
- 29: Motoröl
- 30: Ölwanne
- 31: Motorölkanal
- 32: Mehrwegeventil
- 33: Motoröl-Rücklaufleitung
- 34: Saugleitung
- 35: Getriebeöl-Rückführleitung
- 36: Lager-/Zahnrad-Beölungssystem
- 37: Einweg- oder Rückschlagventil
- 38: Einweg- oder Rückschlagventil
- 39: Getriebegehäuse
- 40: Wand Getriebegehäuse
- 41: Rohrstutzen Federspeicherzylinder
- 42: O-Ring-Dichtung
- 43: Bohrung
- 44: Wand Getriebegehäuse
- 45: Rollbalg
- 46: geschlossenes Ende

## Patentansprüche

1. Vorrichtung zur Speicherung von erwärmtem Getriebeöl, mit einem Speicherbehälter, **gekennzeichnet durch** einen Federspeicherzylinder (5) zur Förderung von Getriebeöl (4) aus einem Getriebe (3) in den Speicherbehälter (5, 14) und umgekehrt.

2. Vorrichtung nach Anspruch 1, **dadurch gekennzeichnet, dass** der Federspeicherzylinder (5) als Speicherbehälter (5, 14) dient.

3. Vorrichtung nach Anspruch 1 oder 2, **dadurch gekennzeichnet, dass** der Federspeicherzylinder (5) und/oder der Speicherbehälter (5, 14) mindestens teilweise von einer Wärmeisolierung (12) umgeben ist.

4. Vorrichtung nach einem der vorangehenden Ansprüche, **dadurch gekennzeichnet, dass** der Federspeicherzylinder (5) in das Getriebe (3) integriert ist.

5. Vorrichtung nach einem der vorangehenden Ansprüche, **dadurch gekennzeichnet, dass** der Federspeicherzylinder (5) einen entgegen der Kraft einer Feder (8) verschiebbaren Kolben (7) enthält.

6. Vorrichtung nach einem der vorangehenden Ansprüche, **dadurch gekennzeichnet, dass** der Federspeicherzylinder (5) zwei durch einen Kolben (7) voneinander getrennte Kammern (13, 14) umschließt, wobei eine (14) der beiden Kammern (13, 14) als Speicherbehälter zur Speicherung des erwärmten Getriebeöls (4) dient.

7. Vorrichtung nach Anspruch 5 oder 6, **dadurch gekennzeichnet, dass** die Feder eine Druckfeder (8) ist, die in der zur Speicherung des Getriebeöls (4) dienenden Kammer (14) angeordnet ist.

8. Vorrichtung nach Anspruch 6 oder 7, **dadurch gekennzeichnet, dass** die zur Speicherung des Getriebeöls (4) dienende Kammer (14) durch eine Getriebeölleitung (16) oder durch eine Saugleitung (34) und eine Rückführleitung (35) mit dem Getriebe (3) verbunden ist.

9. Vorrichtung nach Anspruch 8, **dadurch gekennzeichnet, dass** die Getriebeölleitung (16) bzw. die Saugleitung (34) unterhalb eines Getriebeölspiegels (19) im Getriebe (3) mündet.

10. Vorrichtung nach Anspruch 8 oder 9, **dadurch gekennzeichnet, dass** die Rückführleitung (35) zu einem mit Schmierstellen des Getriebes (3) kommunizierenden Lager-/Zahnrad-Beölungssystem (36) des Getriebes (3) führt.

11. Vorrichtung nach einem der Ansprüche 5 bis 10, **dadurch gekennzeichnet, dass** der Kolben (7) Getriebeöl (4) aus dem Federspeicherzylinder (5) in das Getriebe (3) und/oder zum Lager-/Zahnrad-Beölungssystem (36) fördert, wenn er sich entgegen der Kraft der Feder (8) verschiebt.

12. Vorrichtung nach einem der Ansprüche 5 bis 11, **dadurch gekennzeichnet, dass** der Kolben (7) Getriebeöl (4) aus dem Getriebe (3) in den Federspeicherzylinder (5) fördert, wenn er sich durch die Kraft der Feder (8) verschiebt.

13. Vorrichtung nach einem der Ansprüche 5 bis 12, **dadurch gekennzeichnet, dass** die andere (13) der beiden Kammern (13, 14) belüftet ist und dass der Kolben (7) mit einer äußeren Kraft oder mit einem Fluid beaufschlagbar ist, um den Kolben (7) entgegen der Kraft der Feder (8) zu verschieben.

14. Vorrichtung nach einem der Ansprüche 5 bis 12, **dadurch gekennzeichnet, dass** die andere (13) der beiden Kammern (13, 14) mit einem unter Druck stehenden Fluid (29) beaufschlagbar ist, um den Kolben (7) entgegen der Kraft der Feder (8) zu verschieben.

15. Vorrichtung nach Anspruch 13 oder 14, **dadurch gekennzeichnet, dass** das Fluid Motoröl (29) aus einer Motorölpumpe (28) einer Brennkraftmaschine (2) ist.

16. Vorrichtung nach einem der Ansprüche 5 bis 15, **gekennzeichnet durch** Mittel (28, 32) zum intermittierenden Verschieben des Kolbens (7) im Gebrauch des Getriebes (3).

17. Vorrichtung nach Anspruch 16, **dadurch gekennzeichnet, dass** die Mittel (28, 32) ein Mehrwegeventil (32) umfassen.

18. Vorrichtung nach einem der vorangehenden Ansprüche, **dadurch gekennzeichnet, dass** der Federspeicherzylinder (5) eine Membran oder einen Rollbalg (45) enthält.

19. Vorrichtung nach einem der vorangehenden Ansprüche, **gekennzeichnet durch** mindestens ein Ventil oder mindestens eine Drossel zur zeitverzögerten Förderung des Getriebeöls (4) aus dem Speicherbehälter (5, 14) in das Getriebe (3).

20. Vorrichtung nach Anspruch 19, **dadurch gekennzeichnet, dass** das Ventil oder die Drossel in der Schmierölleitung (16), in der Rückführleitung (35) und/oder in einer Fluidleitung zum Zuführen von Fluid zum Kolben (7) oder in eine Kammer (13) des Federspeicherzylinders (5) angeordnet ist

21. Verfahren zum Fördern von erwärmtem Getriebeöl zwischen einem Getriebe und einen Speicherbehälter, **dadurch gekennzeichnet, dass** das Getriebeöl (4) durch die Kraft einer Feder (8) aus dem Getriebe (3) in den Speicherbehälter (5, 14) gefördert wird.

22. Verfahren nach Anspruch 21, **dadurch gekennzeichnet, dass** die Feder (8) durch eine äußere Kraft oder durch den Druck eines Fluids (29) zusammengedrückt wird, dass beim Zusammendrücken der Feder (8) Getriebeöl (4) aus dem Speicherbehälter (5, 14) in das Getriebe (3) gefördert wird und dass bei Entlastung der Feder (8) Getriebeöl (4) aus dem Getriebe (3) in den Speicherbehälter (5, 14) gefördert wird.

23. Verfahren nach Anspruch 22, **dadurch gekennzeichnet, dass** das Fluid Motoröl (29) einer Brennkraftmaschine (2) ist.

24. Verfahren nach Anspruch 23, **dadurch gekennzeichnet, dass** die Feder (8) beim Start der Brennkraftmaschine (2) durch das unter Druck stehende Motoröl zusammengedrückt und beim Abstellen der Brennkraftmaschine (2) entlastet wird.

25. Verfahren nach einem der Ansprüche 20 bis 24, **dadurch gekennzeichnet, dass** das Getriebeöl (4) aus dem Speicherbehälter (5, 14) zu einem mit Schmierstellen des Getriebes (3) kommunizierenden Lager-/Zahnrad-Beölungssystem (36) des Getriebes (3) gefördert wird.

26. Verfahren nach Anspruch 25, **dadurch gekennzeichnet, dass** die Feder (8) im Betrieb des Getriebes (3) und/oder der Brennkraftmaschine (2) in gewissen Zeitabständen gesteuert intermittierend zusammengedrückt und entlastet wird.

## Claims

1. Device for storing heated gear oil, comprising a storage container, **characterised by** an accumulator cylinder (5) for conveying gear oil (4) from a gear box (3) into the storage container (5, 14), and vice versa.

2. Device according to claim 1, **characterised in that** the accumulator cylinder (5) acts as a storage container (5, 14).

3. Device according to either claim 1 or claim 2, **characterised in that** the accumulator cylinder (5) and/or the storage container (5, 14) is enclosed at least in part by heat insulation (12).

4. Device according to any of the preceding claims, **characterised in that** the accumulator cylinder (5) is integrated into the gear box (3).

5. Device according to any of the preceding claims, **characterised in that** the accumulator cylinder (5) contains a piston (7) which can be displaced against the force of a spring (8).

6. Device according to any of the preceding claims, **characterised in that** the accumulator cylinder (5) surrounds two chambers (13, 14) which are mutually separated by a piston (7), one (14) of the two chambers (13, 14) acting as a storage container for storing the heated gear oil (4).

7. Device according to either claim 5 or claim 6, **characterised in that** the spring is a compression spring (8) which is arranged in the chamber (14) for storing the gear oil (4).

8. Device according to either claim 6 or claim 7, **characterised in that** the chamber (14) for storing the gear oil (4) is connected to the gear box (3) by a gear oil line (16) or by a suction line (34) and a return line (35).

9. Device according to claim 8, **characterised in that** the gear oil line (16) or the suction line (34) discharges in the gear box (3) below a gear oil level (19).

10. Device according to claim 8 or claim 9, **characterised in that** the return line (35) leads to a bearing/gear wheel oiling system (36) of the gear box (3), which system communicates with lubrication points of the gear box (3).

11. Device according to any of claims 5 to 10, **characterised in that** the piston (7) conveys gear oil (4) from the accumulator cylinder (5) into the gear box (3) and/or to the bearing/gear wheel oiling system (36) when it is displaced against the force of a spring (8).

12. Device according to any of claims 5 to 11, **characterised in that** the piston (7) conveys gear oil (4) from the gear box (3) into the accumulator cylinder (5) when it is displaced by the force of a spring (8).

13. Device according to any of claims 5 to 12, **characterised in that** the other (13) of the two chambers (13, 14) is ventilated, and **in that** the piston (7) can be impacted by an external force or by a fluid in order to displace the piston (7) against the force of the spring (8).

14. Device according to any of claims 5 to 12, **characterised in that** the other (13) of the two chambers (13, 14) can be impacted by a pressurised fluid (29), in order to displace the piston (7) against the force of the spring (8).

15. Device according to either claim 13 or claim 14, **characterised in that** the fluid is engine oil (29) from an engine oil pump (28) of an internal combustion engine (2).

16. Device according to any of claims 5 to 15, **characterised by** means (28, 32) for intermittently displacing the piston (7) during operation of the gear box (3).

17. Device according to claim 16, **characterised in that** the means (28, 32) comprise a multi-way valve (32).

18. Device according to any of the preceding claims, **characterised in that** the accumulator cylinder (5) contains a membrane or air bellows (45).

19. Device according to any of the preceding claims, **characterised by** at least one valve or at least one throttle for conveying gear oil (4) from the storage container (5, 14) into the gear box (3) in a time-delayed manner.

20. Device according to claim 19, **characterised in that** the valve or the throttle is arranged in the lubrication oil line (16), the return line (35) and/or in a fluid line for feeding fluid to the piston (7) or into a chamber (13) of the accumulator cylinder (5).

21. Method for conveying heated gear oil between a gear box and a storage container, **characterised in that** the gear oil (4) is conveyed from the gear box (3) into the storage container (5, 14) by the force of a spring (8).

22. Method according to claim 21, **characterised in that** the spring (8) is compressed by an external force or by the pressure of a fluid (29), **in that**, when the spring (8) is compressed, gear oil (4) is conveyed from the storage container (5, 14) into the gear box (3) and **in that**, when the spring (8) is released, gear oil (4) is conveyed from gear box (3) into the storage container (5, 14).

23. Method according to claim 22, **characterised in that** the fluid is engine oil (29) of an internal combustion engine (2).

24. Method according to claim 23, **characterised in that** the spring (8) is compressed by the pressurised engine oil when the internal combustion engine (2) is started and is released when the internal combustion engine (2) is switched off.

25. Method according to any of claims 20 to 24, **characterised in that** the gear oil (4) is conveyed from the storage container (5, 14) to a bearing/gear wheel oiling system (36) of the gear box (3), which system communicates with lubrication points of the gear box (3).

26. Method according to claim 25, **characterised in that** the spring (8) is intermittently compressed and released in a controlled manner at specified time intervals during operation of the gear box (3) and/or the internal combustion engine (2).

## Revendications

1. Dispositif de stockage d'huile de transmission chauffée, comprenant un réservoir, **caractérisé par** un cylindre accumulateur à ressort (5) pour acheminer de l'huile de transmission (4) d'une transmission (3) dans le réservoir (5, 14) et vice versa.

2. Dispositif selon la revendication 1, **caractérisé en ce que** le cylindre accumulateur à ressort (5) sert de réservoir (5, 14).

3. Dispositif selon la revendication 1 ou la revendication 2, **caractérisé en ce que** le cylindre accumulateur à ressort (5) et/ou le réservoir (5, 14) est ou sont entourés au moins en partie d'une isolation thermique (12).

4. Dispositif selon l'une quelconque des revendications précédentes, **caractérisé en ce que** le cylindre accumulateur à ressort (5) est intégré à la transmission (3).

5. Dispositif selon l'une quelconque des revendications précédentes, **caractérisé en ce que** le cylindre accumulateur à ressort (5) contient un piston (7) qui peut coulisser à l'encontre de la force d'un ressort (8).

6. Dispositif selon l'une quelconque des revendications précédentes, **caractérisé en ce que** le cylindre accumulateur à ressort (5) entoure deux chambres (13, 14) séparées l'une de l'autre par un piston (7), l'une (14) des deux chambres (13, 14) servant de réservoir pour stocker l'huile de transmission chauffée (4).

7. Dispositif selon la revendication 5 ou la revendication 6, **caractérisé en ce que** le ressort est un ressort de compression (8), qui est aménagé dans la chambre (14) servant au stockage de l'huile de transmission (4).

8. Dispositif selon la revendication 6 ou la revendication 7, **caractérisé en ce que** la chambre (14) servant au stockage de l'huile de transmission (4) est raccordée à la transmission (3) par un conduit d'huile de transmission (16) ou par un conduit d'aspiration (34) et un conduit de recyclage (35).

9. Dispositif selon la revendication 8, **caractérisé en ce que** le conduit d'huile de transmission (16) ou le conduit d'aspiration (34) débouche dans la transmission (3) en dessous d'un niveau d'huile de transmission (19).

10. Dispositif selon la revendication 8 ou la revendication 9, **caractérisé en ce que** le conduit de recyclage (35) mène à un système de graissage de paliers/engrenages (36) communiquant avec les points de graissage de la transmission (3).

11. Dispositif selon l'une quelconque des revendications 5 à 10, **caractérisé en ce que** le piston achemine de l'huile de transmission (4) provenant du cylindre accumulateur à ressort (5) à la transmission (3) et/ou au système de graissage de paliers/engrenages (36) s'il se déplace à l'encontre de la force du ressort (8).

12. Dispositif selon l'une quelconque des revendications 5 à 11, **caractérisée en ce que** le piston (7) achemine de l'huile de transmission (4) provenant de la transmission (3) dans le cylindre accumulateur à ressort (5) s'il se déplace sous l'action de la force du ressort (8).

13. Dispositif selon l'une quelconque des revendications 5 à 12, **caractérisé en ce que** l'autre (13) des deux chambres (13, 14) est aérée et **en ce que** le piston (7) peut être sollicité par une force externe ou par un fluide afin de déplacer le piston (7) à l'encontre de la force du ressort (8).

14. Dispositif selon l'une quelconque des revendications 5 à 12, **caractérisé en ce que** l'autre (13) des deux chambres (13, 14) peut être sollicitée par un fluide (29) sous pression pour déplacer le piston (7) à l'encontre de la force du ressort (8).

15. Dispositif selon la revendication 13 ou la revendication 14, **caractérisé en ce que** le fluide est une huile motrice (29) provenant d'une pompe d'huile motrice (28) d'un moteur à combustion interne (2).

16. Dispositif selon l'une quelconque des revendications 5 à 15, **caractérisé par** des moyens (28, 32) pour déplacer par intermittence le piston (7) lors de l'usage de la transmission (3).

17. Dispositif selon la revendication 16, **caractérisé en ce que** les moyens (28, 32) comprennent une soupape à voies multiples (32).

18. Dispositif selon l'une quelconque des revendications précédentes, **caractérisé en ce que** le cylindre accumulateur à ressort (5) contient une membrane ou un soufflet roulant (45).

19. Dispositif selon l'une quelconque des revendications précédentes, **caractérisé par** au moins une soupape ou au moins un étranglement pour acheminer avec un certain retard l'huile de transmission (4) du réservoir (5, 14) à la transmission (3).

20. Dispositif selon la revendication 19, **caractérisé en ce que** la soupape ou l'étranglement est aménagé(e) dans le conduit d'huile de graissage (16), dans le conduit de recyclage (35) et/ou dans un conduit de fluide pour acheminer du fluide au piston (7) ou dans une chambre (13) du cylindre accumulateur à ressort (5).

21. Procédé pour acheminer de l'huile de transmission chauffée entre une transmission et un réservoir, **caractérisé en ce que** l'huile de transmission (4) est acheminée par la force d'un ressort (8) de la transmission (3) dans le réservoir (5, 14).

22. Procédé selon la revendication 21, **caractérisé en ce que** le ressort (8) est comprimé par une force externe ou par la pression d'un fluide (29), **en ce que**, lors de la compression du ressort (8), de l'huile de transmission (4) est acheminée du réservoir (5, 14) dans la transmission (3) et **en ce que**, lors de la détente du ressort (8), de l'huile de transmission (4) est acheminée de la transmission (3) dans le réservoir (5, 14).

23. Procédé selon la revendication 22, **caractérisé en ce que** le fluide est une huile motrice (29) d'un moteur à combustion interne (2).

24. Procédé selon la revendication 23, **caractérisé en ce que** le ressort (8) est pressé au démarrage du moteur à combustion interne (2) par l'huile motrice sous pression et est déchargé lors de l'arrêt du moteur à combustion interne (2).

25. Procédé selon l'une quelconque des revendications 20 à 24, **caractérisé en ce que** l'huile de transmission (4) est acheminée du réservoir (5, 14) à un système de graissage de paliers/engrenages (36) de la transmission (3) communiquant avec des points de graissage de la transmission (3).

26. Procédé selon la revendication 25, **caractérisé en ce que** le ressort (8) est comprimé et détendu de manière intermittente par commande dans certains intervalles de temps lors du fonctionnement de la transmission (3) et/ou du moteur à combustion interne (2).
